# EUROPEAN PATENT SPECIFICATION

(11) **EP 0 647 205 B1**
(45) Date of publication and mention of the grant of the patent: **22.05.1996**
(21) Application number: 93910074.9
(22) Date of filing: 07.06.1993
(51) Int. Cl.: C01B 25/234

(54) **PROCESS FOR PURIFYING PHOSPHORIC ACID**
VERFAHREN ZUR REINIGUNG VON PHOSPHORSÄURE
PROCEDE DE PURIFICATION DE L'ACIDE PHOSPHORIQUE

(30) Priority: 08.06.1992 FI 922650
(43) Date of publication of application: 12.04.1995
(73) Proprietor: KEMIRA OY, SF-02271 Espoo (FI)
(72) Inventor: KARJALAINEN, Timo, FIN-70420 Kuopio (FI); KARI, Esko, FIN-02240 Espoo (FI)
(74) Representative: Örtenblad, Bertil Tore
(86) International application number: FI9300245
(87) International publication number: WO9325472

(56) References cited:
- DE-A- 3 022 662
- US-A- 3 306 702

## Description

The invention relates to a process for removing iron from phosphoric acid prepared by the wet process.

Phosphoric acid is prepared by the wet process by allowing a mineral acid, most commonly sulfuric acid, to react with a calcium phosphate concentrate, whereby a dilute phosphoric acid, containing approx. 30 % P₂O₅, and a calcium sulfate precipitate are formed. After filtration, the acid contains many kinds of anionic impurities, such as sulfate and fluorine compounds, and cationic impurities, the most important of which are iron, aluminum, magnesium and calcium, as well as organic impurities. The quantity and type of the impurities are dependent primarily on the crude phosphate used as the raw material.

The dilute acid is concentrated by evaporation to a concentration of 50-60 % P₂O₅, whereby the volatile impurities such as fluorine compounds are removed along with the evaporating water vapor, but the concentrations of other impurities increase.

Many kinds of purification processes have been developed for the purification of wet phosphoric acid so that the concentrations of the impurities could be reduced to such a level that the acid could be used for even other purposes than the production of fertilizers.

It is known to use an electrothermal purification process. By the electrothermal process it is possible to prepare a phosphoric acid having a low iron content, but the process consumes a high amount of energy and is therefore expensive.

From GB patent publication 1 588 413 there is known a process for removing iron from wet phosphoric acid, wherein the iron is precipitated by using an alkali ferrocyanide or ammonium ferrocyanide. However, owing to the toxicity of cyanides, and especially of hydrocyanic acid, the process is not very attractive.

It is further known to extract the phosphoric acid by means of organic solvents, from which it is re-extracted into an aqueous phase and is concentrated. Most of the iron remains in the aqueous phase, from which it can be removed together with the raffinate. However, sufficiently low iron concentrations have not been achieved by extraction; an additional purification step has been required, such as the removing of iron from an organic phase by the use of anionic ion exchange resins (US patent publication 5 006 319), or it has been necessary to carry out other procedures (EP application publication 327 234). Another disadvantage of the process is that it is expensive. The produced extract is dilute with respect to phosphoric acid, so concentration is necessary. The solvent has to be recycled by re-extraction or by distillation. The organic phase often has to be purified by an additional treatment. The purification of the raffinates is costly, and furthermore, organic residues must be removed from the product so that the product obtained will be water clear. In addition, the handling of organic solvents may result in problems of industrial hygiene or in a fire hazard.

It is also known that the removing of iron from an aqueous solution of phosphoric acid by means of a cationic ion exchange resin will not succeed, since Fe³⁺ forms in phosphoric acid complexes so stable that they will pass through the ion exchange treatment unchanged and the removing of iron will not be successful.

The object of the present invention is indeed to produce phosphoric acid which contains virtually no iron and which can be produced at moderate cost, without environmental hazards.

It was observed, surprisingly, that the Fe³⁺ ion forms stronger complexes with the fluoride ion which is present as an impurity in phosphoric acid than does the Fe⁺ ion. Likewise, in phosphoric acid the Fe³⁺ ion may be present as a phosphate complex. Since the iron ions are bound in complexes, they will not as such become adsorbed to a cationic ion exchange resin. The removing of iron by means of an anionic ion exchange resin is also not efficient.

According to the method of the invention, the Fe³⁺ complexes are broken up by reducing the iron ions to a valence of two. The complexes of the Fe³⁺ ion with a fluoride and phosphate ion are more unstable than are the corresponding Fe³⁺ complexes. After reduction, the Fe⁺ ions can be removed by cationic ion exchange.

The principal characteristics of the process according to the invention are indicated in the accompanying patent claims.

The reduction of the Fe³⁺ ions can be carried out by electrolytic reduction. Electrolytic reduction has an advantage in its purity; additional chemicals need not be introduced into the acid to be purified. This increases the available ion exchange capacity. Further advantages are the easy control of electrolytic reduction and the fact that the reduction can be brought virtually to completion. It is also possible to use chemical reduction.

Electrolytic reduction takes place in a cell in which the cathode and anode chambers are separated from each other by a diaphragm or an ion exchange membrane. This is done in order to prevent the re-oxidation, on the anode, of the Fe³⁺ ion which has been reduced on the cathode. Electric current is led to the electrodes, the materials of which can be selected freely so as to minimize the share of secondary reactions and energy losses. The acid which contains the impurity to be reduced serves as a catholyte which is circulated through the cathode chamber. Fe³⁺ ions are reduced to Fe⁺ ions on the cathode when the voltage is switched on between the electrodes. The anolyte used may be either phosphoric acid similar to the acid to be reduced on the cathode, or it may be some other electrically conductive solution. What is most important is that secondary reactions are minimal.

The progress of the reduction can be monitored either by means of chemical analysis or a redox electrode. When the desired degree of reduction has been reached, the acid is transferred to the ion exchange stage. When necessary, the reduction and ion exchange stages can be repeated.

The ion exchange following the reduction is carried out by using a cationic ion exchange agent. The acid to be purified is caused to flow through an ion exchange resin which is in the form of an acid, the cations adhering to the resin. When the resin has been saturated with cations it is regenerated with a suitable regeneration solution and, when necessary, any residues of the regeneration solution are washed out of the resin before a new ion exchange cycle.

The cationic ion exchange resin may also be in a Na⁺ or K⁺ form, in which case the purified phosphoric acid is suitable for the preparation of pure alkali phosphates.

The concentration of the acid to be purified may be varied within a wide range. Likewise, the concentration of the Fe³⁺ ion which is present as an impurity may vary.

The temperature at which the reduction and/or ion exchange is carried out can be selected according to the materials used. In general, electrolytic reduction and ion exchange are more rapid at an elevated temperature than at room temperature.

A few embodiment examples are presented below with the purpose only to illustrate the present invention.

### Example 1.

### Reference example

A dilute phosphoric acid was prepared from Siilinjärvi phosphate. Before the ion exchange treatment the P₂O₅ concentration was 27.3 % and the Fe concentration was 0.22 %. The phosphoric acid was pumped at room temperature through a macroporous strong cation resin Amberlite 200, at a rate of 100 ml/min. The dimensions of the ion exchange column were: diameter 0.044 m, height 2.93 m. After the ion exchange treatment the P₂O₅ concentration was 27.3 % and the Fe concentration was 0.17 %. 23 % of the iron had been removed.

### Example 2.

A dilute phosphoric acid was prepared from Siilinjärvi apatite. Before the ion exchange treatment the P₂O₅ concentration was 25.5 % and the Fe concentration was 0.27 %.

The Fe³⁺ was reduced in an electrolytic cell packed with graphite, the electrode chambers being separated from each other by an ion exchange membrane. The solution to be reduced was circulated on the cathode side. A sulfuric acid of the same concentration was used on the anode side. The nominal electrode surface area of the cell was 8 dm, and the current density calculated from it was 250 A/m. The reduction was discontinued when the Fe³⁺ conversion was >99 %. The phosphoric acid was pumped through the ion exchange column mentioned in Example 1, at room temperature, at a rate of 100 ml/min. After the ion exchange treatment the P₂O₅ concentration was 25.0 % and the Fe concentration was 0.007 %.

### Example 3.

A dilute phosphoric acid was prepared from Siilinjärvi apatite Before the ion exchange treatment the P₂O₅ concentration was 35.0 % and the Fe concentration was 0.37 %.

The reduction of Fe³⁺ was carried out in accordance with Example 2. Phosphoric acid was pumped through the ion exchange column mentioned in Example 1, at a temperature of 70 °C, at a rate of 100 ml/min. After the ion exchange treatment the P₂O₅ concentration was 33.7 % and the Fe concentration was 0.0168 %.

### Example 4.

A dilute phosphoric acid was prepared from Siilinjärvi apatite. Before the electrolytic reduction treatment the P₂O₅ concentration was 26.2 % and the Fe concentration was 0.10 %. The Fe³⁺ ions were reduced to Fe⁺ ions in an electrolytic cell the electrode surface area in which was 0.5 m. The electrode chambers were separated from each other by a ceramic diaphragm. The current density used was 180 A/m. At the end of the reduction the conversion of Fe³⁺ was 99.8 %. After the reduction the acid was introduced, at room temperature, at a rate of 200 ml/min, to an Amberlite 200 ion exchange column having a diameter of 0.1 m and a height of 1.5 m.

After the ion exchange treatment the P₂O₅ concentration was 24.5 % and the Fe concentration was 0.0015 %.

## Claims

1. A process for removing iron from phosphoric acid prepared by the wet process, **characterized** in that the Fe³⁺ ions present as an impurity in the phosphoric acid are reduced to Fe⁺ ions, after which reduction the Fe⁺ ions can be removed from the phosphoric acid by cationic ion exchange.

2. A process according to Claim 1 for removing iron from phosphoric acid prepared by the wet process, **characterized** in that the Fe³⁺ ions present as an impurity in the phosphoric acid are reduced electrolytically.

3. A process according to Claim 2 for removing iron from phosphoric acid prepared by the wet process, **characterized** in that the electrolytic reduction takes place in a cell the cathode and anode chambers of which are separated from each other by a diaphragm or an ion exchange membrane.

4. A process according to any of the above Claims 1-3 for removing iron from phosphoric acid prepared by the wet process, **characterized** in that the cationic ion exchange is carried out with the help of a strong ion exchange resin in acid form.

5. A process according to any of the above Claims 1-4 for removing iron from phosphoric acid prepared by the wet process, **characterized** in that the cationic ion exchange is carried out with the help of an ion exchange resin in Na⁺ or K⁺ form.

6. A process according to any of the above Claims 1-5 for removing iron from phosphoric acid prepared by the wet process, **characterized** in that the reduction and/or the cationic ion exchange step may be repeated.

## Patentansprüche

1. Verfahren zum Entfernen von Eisen aus im Naßverfahren hergestellter Phosphorsäure,
dadurch gekennzeichnet, daß die Fe³⁺-Ionen, welche als Verunreinigung in der Phosphorsäure vorhanden sind, zu Fe⁺-Ionen reduziert werden, nach welcher Reduktion die Fe⁺-Ionen aus der Phosphorsäure durch Kationen-Austausch entfernt werden können.

2. Verfahren nach Anspruch 1, dadurch gekennzeichnet, daß die als Verunreinigung in der Phosphorsäure enthaltenen Fe³⁺-Ionen elektrolytisch reduziert werden.

3. Verfahren nach Anspruch 2, dadurch gekennzeichnet, daß die elektrolytische Reduktion in einer Zelle durchgeführt wird, in der die Kathoden- und Anodenkammern voneinander durch ein Diaphragma oder eine Ionenaustauscher-Membran getrennt sind.

4. Verfahren nach einem der Ansprüche 1 bis 3, dadurch gekennzeichnet, daß der Kationenaustausch unter Zuhilfenahme eines starken Ionenaustauscherharzes in der Säureform durchgeführt wird.

5. Verfahren nach Anspruch 1 bis 4, dadurch gekennzeichnet, daß der Kationenaustausch unter Zuhilfenahme eines Ionenaustauscherharzes in der Na⁺- oder K⁺-Form durchgeführt wird.

6. Verfahren nach einem der Ansprüche 1 bis 5, dadurch gekennzeichnet, daß der Reduktions- und/oder der Kationenaustauschschritt wiederholt werden kann.

## Revendications

1. Procédé d'extraction de fer à partir d'acide phosphorique préparé par voie humide, caractérisé par le fait que les ions Fe³⁺ présents en tant qu'impuretés dans l'acide phosphorique sont réduits en ions Fe⁺, les ions Fe⁺ pouvant ensuite être extraits de l'acide phosphorique par échange de cations.

2. Procédé d'extraction de fer à partir d'acide phosphorique préparé par voie humide, conformément à la Revendication 1, caractérisé par le fait que les ions Fe³⁺ présents en tant qu'impuretés dans l'acide phosphorique sont réduits par électrolyse.

3. Procédé d'extraction de fer à partir d'acide phosphorique préparé par voie humide, conformément à la Revendication 2, caractérisé par le fait que la réduction électrolytique se déroule dans une cellule dont les chambres anodique et cathodique sont séparées l'une de l'autre par un diaphragme ou par une membrane échangeuse d'ions.

4. Procédé d'extraction de fer à partir d'acide phosphorique préparé par voie humide, conformément aux Revendications 1 à 3 ci-dessus, caractérisé par le fait que l'échange de cations est réalisé au moyen d'une forte résine échangeuse d'ions sous forme acide.

5. Procédé d'extraction de fer à partir d'acide phosphorique préparé par voie humide, conformément aux Revendications 1 à 4 ci-dessus, caractérisé par le fait que l'échange de cations est réalisé au moyen d'une résine échangeuse d'ions sous forme Na⁺ ou K⁺.

6. Procédé d'extraction de fer à partir d'acide phosphorique préparé par voie humide, conformément aux Revendications 1 à 5 ci-dessus, caractérisé par le fait que l'étape de réduction et/ou d'échange de cations peut être répétée.
